Europäisches Patentamt

European Patent Office

Office européen des brevets

(19)

(11) Veröffentlichungsnummer: **0 086 987**

**A1**

(12) # EUROPÄISCHE PATENTANMELDUNG

(21) Anmeldenummer: 83100776.0

(22) Anmeldetag: 27.01.83

(51) Int. Cl.³: **A 61 C 17/02**
**A 61 H 13/00**

(30) Priorität: 03.02.82 DE 3203626

(43) Veröffentlichungstag der Anmeldung:
31.08.83 Patentblatt 83/35

(84) Benannte Vertragsstaaten:
AT BE CH FR GB IT LI LU NL SE

(71) Anmelder: Hirsch, Paul
Karl-Theodor-Strasse 91
D-8000 München 40(DE)

(72) Erfinder: Hirsch, Paul
Karl-Theodor-Strasse 91
D-8000 München 40(DE)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath
Maximilianstrasse 58
D-8000 München 22(DE)

(54) Munddusche.

(57) Die Anmeldung betrifft eine Munddusche ohne Antriebsmotor, bei der aufgabengemäß ein pulsierender Luft-
Wasserstrahl erzeugt wird, der weich im Aufprall, jedoch
wirkungsvoll im Reinigungseffekt ist. Erreicht wird dies
dadurch, daß ein luftdichter Behälter (6a) teilweise mit
Wasser und teilweise mit Preßluft gefüllt ist. Die Preßluft
fördert das Wasser durch einen Schlauch (1), der luftdicht
durch den Deckel (2) geführt ist, nach außen zu einer Düse.
Im Preßluftbereich weist der Schlauch (1) eine Öffnung (9)
auf, so daß hier auch Preßluft unmittelbar in den Schlauch
(1) eintreten kann. Damit wird ein pulsierender Luft-
Wasserstrahl erzeugt.

FIG.1

Croydon Printing Company Ltd.

# 1 Beschreibung

Die Erfindung betrifft eine Munddusche, so wie diese im Oberbegriff von Anspruch 1 beschrieben ist.

Bekannte Mundduschen bestehen aus einem elektrisch angetriebenen Pumpaggregat. Aus einem Behälter wird Wasser über eine Schlauchverbindung zu einer Düse gefördert, durch die das Wasser pulsierend austritt. Solch eine Vorrichtung ist beispielsweise durch die DE-AS 24 16 099 bekannt geworden. Nachteilig ist hierbei, daß die Munddusche wegen ihres komplizierten Aufbaus kostenaufwendig ist und stets ein Stromanschluß zur Verfügung stehen muß.

Um Zähne von Belag zu reinigen, kann man eine Vorrichtung nach der DE-OS 24 52 195 verwenden. Die Anordnung besteht aus einer Aerosolflasche, in die eine physiologische NaCl-Auflösung mit einem pH-Wert zwischen 7,2 und 7,8 eingefüllt ist. Am Kopf dieser Aerosolflasche ist ein bekannter Zerstäubermechanismus vorgesehen, an den man auch eine Zahnbürste anschließen kann. Bis in Bodennähe der Aerosolflasche ist ein Rohr geführt und in diesem Rohr befinden sich zwei Elektroden, die über entsprechende Leitungen an eine Gleichstromquelle anschließbar sind, beispielsweise ein Primärelement. Oberhalb der NaCl-Auflösung befindet sich ein Treibgas. Drückt man auf den Knopf des Zerstäubungsmechanismus, schaltet man gleichzeitig die Stromzufuhr zu den Elektroden ein, so daß eine Elektrolyse in Gang gesetzt wird. Nachteilig bei dieser Vorrichtung ist, daß ein erheblicher Aufwand betrieben werden muß, einmal bei der Herstellung der Vorrichtung und zum anderen während des Gebrauchs. Nachteilig ist weiter, daß kein pulsierender Flüssigkeitsstrom auf die Zähne bzw. auf das Zahnfleisch trifft, so daß der angestrebte Effekt gering ist.

Eine ähnliche, jedoch im Aufbau noch kompliziertere Vorrichtung ist durch die DE-PS 516 004 bekannt geworden. Hier ist ein Behälter mit einem Deckel versehen. Im Verlauf der Behälterwandung sind Heizwiderstände angebracht, um das in den Behälter eingefüllte Wasser erwärmen zu können. Am Deckel ist zentrisch ein zylindrischer Behälter eingesetzt. Vom zylindrischen Behälter führt eine mit Löchern versehene Rohrleitung durch den Flüssigkeitsteil der Vorrichtung und wird durch den Deckel nach außen geführt. Bringt man in den zylindrischen Behälter eine Kohlensäuretablette, dann wird die Kohlensäure durch das Rohr nach außen geführt und reißt im perforierten Teil des Rohres das Mundwasser mit, das bis zu einer Zahnbürste geführt und dort ausgesprüht wird. Auch diese Vorrichtung ist nachteilig, weil sie aufwendig im Aufbau ist und keine pulsierende Strömung erzeugt werden kann. Weiter ist nachteilig, daß die kühlende Eigenschaft der Kohlensäure nur durch Verwendung einer Heizeinrichtung aufgehoben werden kann.

Aufgabe der Erfindung ist es, ein pulsierendes Mundwasser - z.B. Wasserstrahl - zum Reinigen von Zähnen, Zahnfleisch und Mundhöhle zu erhalten, ohne daß ein Motor mit zugeordneten Fördermitteln, wie Pumpe, Förderrad oder dgl. Verwendung finden muß.

Gelöst wird die gestellte Aufgabe durch die kennzeichnenden Merkmale von Anspruch 1.

Die erfindungsgemäße Vorrichtung ist sehr billig im Aufbau, also nicht kostenaufwendig im Vergleich zu den herkömmlichen Mundduschen, die einen pulsierenden Flüssigkeitsstrom erzeugen. Sie ist jederzeit verwendbar, ohne daß eine Stromquelle zur Verfügung stehen muß. Der Reinigungsstrahl ist angenehm, weil der pulsierende Luftwasserstrahl keinen so harten Aufprall bewirkt, daß kein Zahnfleischbluten eintritt, obwohl der Reinigungseffekt

gleichwertig den teuren, motorbetriebenen Mundduschen ist. Außerdem gibt es keine Teile, die durch Ablagerungen z.B. verkalken können.

Weitere Einzelheiten der Erfindung ergeben sich aus der Zeichnung und Beschreibung, und zwar zeigt:

Fig. 1 eine erfindungsgemäße Vorrichtung in prinzipieller Darstellung,

Fig. 2 eine Vorrichtung ähnlich wie Fig. 1, jedoch mit einem eingesetzten Druckerzeuger, und

Fig. 3 die Fortsetzung des aus dem Druckbehälter herausgeführten Schlauches gemäß Fig. 1, mit einer Düse und einer Regulier- und Verschlußvorrichtung erfindungsgemäßer Art versehen. (Alle Darstellungen im Schnitt)

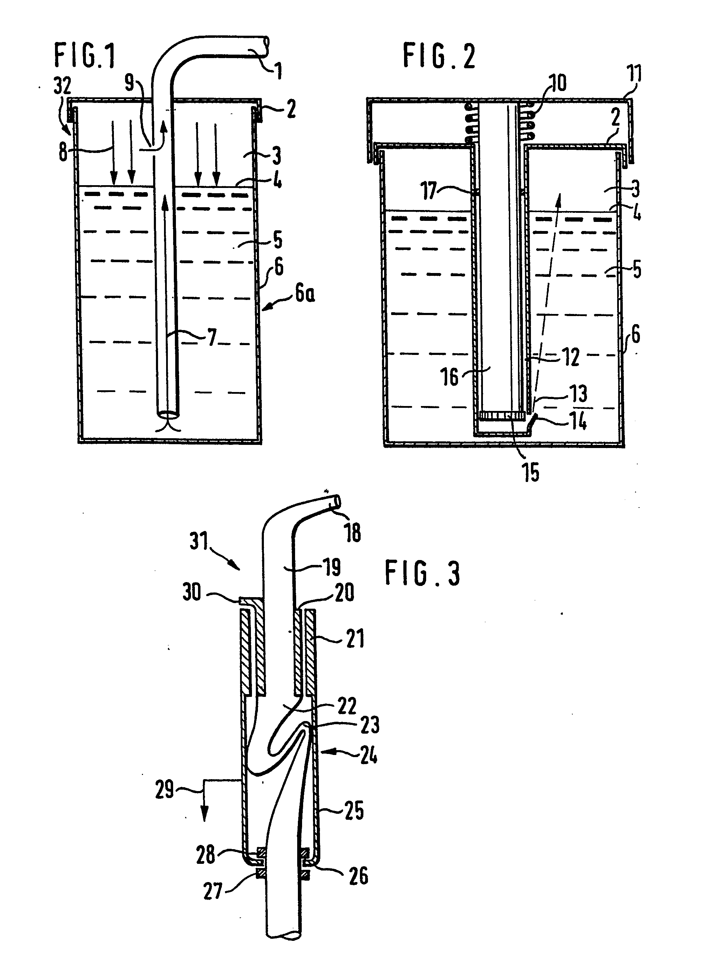

Der Druckbehälter 6a nach Fig. 1 besteht aus einem z.B. zylindrischen Gefäß 6, das mit einem abnehmbaren, jedoch druckdicht aufgesetzten Deckel 2 versehen ist. Durch den Deckel ist ein Schlauch 1 geführt. Einen Schlauch verwendet man zweckmäßigerweise deshalb, weil er flexibel ist. Man könnte aber auch im Innenraum des Gefäßes 6 ein Rohr anschließen.

Der obere Teil des Gefäßes 6 besteht aus einem Luftraum 3 und der untere Teil aus einem Wasserraum 5 bzw. kann man dort auch eine andere Mundspülflüssigkeit bekannter Art einfüllen. Der Schlauch 1 ist bis in Bodennähe geführt.

Im Deckel oder beispielsweise an der Stelle, wo der Pfeil 32 das Gefäß 6 berührt, könnte ein Rückschlagventil eingebaut sein, damit man einen Preßlufterzeuger dort anschließen kann. Dazu genügt bereits eine Luftpumpe. Man kann hier aber auch eine Druckpatrone oder einen sonst bekannten Druckerzeuger verwenden.

4

Durch das Einführen von Druckluft baut sich ein Überdruck in dem Druckbehälter 6a auf, der entsprechend der Pfeile 8 auf die Wasseroberfläche drückt. Dabei kann die Trennlinie 4 beispielsweise im Verhältnis 1 : 4 oder 1 : 6 liegen; die sich im Luftraum 3 befindende Preßluft reicht dann noch aus, um das Gesamtgefäß zu entleeren, sobald die Verschlußvorrichtung den Weg freigibt.

Das unter Druck stehende Wasser wird entsprechend dem Pfeil 7 im Schlauch 1 nach außen gefördert, wobei der Schlauch 1 ebenfalls druckfest im Deckel 2 vorgesehen ist. Der Schlauch 1 könnte natürlich auch seitlich aus dem Gefäß herausgeführt werden.

Erfindungswesentlich ist jedoch die Öffnung 9, denn hier kann - s. den rechtwinklig abgeknickten Pfeil - ebenfalls Preßluft unmittelbar in den Schlauch 1 gelangen und erzeugt dadurch eine pulsierende Strömung des Mundwassers, das gemäß dem Pfeil 7 sich an dieser Stelle mit der unmittelbar eintretenden Preßluft trifft. Die Öffnung 9 kann relativ klein sein, beispielsweise kann sie 5 % der Querschnittsfläche (lichte Weite) des Schlauches 1 ausmachen. Man kann aber auch eine Vielzahl von Öffnungen 9 im Bereich des Luftraumes 3 vorsehen oder auch ganz feine Perforationen in diesem Bereich anbringen.

Eine weitere Art, einen Überdruck im Gefäß 6 zu erzeugen, besteht darin, daß man an der Ringfläche des Deckels 2 ein Gewinde anbringt und ein Gegengewinde in diesem Bereich am Behälter 6a. Liegen die Gewinde eng genug aneinander und ist die Ringfläche des Deckels 2 lang genug, dann kann man durch Aufschrauben des Deckels einen Überdruck im Druckgefäß erzeugen, ohne daß man ein zusätzliches druckerzeugendes Gerät benötigt.

Man kann aber auch unmittelbar in das Gerät eine Pumpe einbauen, wie dies in Fig. 2 schematisch gezeigt ist. Im Deckel 2 sieht man beispielsweise eine Zylinderbuchse vor, die als Pumpenraum 12 bezeichnet ist. Im unteren Bereich ist ein Rückschlagventil 14 vorgesehen. Wird nun der eingesetzte Kolben 16 nach unten bewegt, dann wird ein Druck erzeugt, der entsprechend dem Pfeil 13 in den Luftraum 3 gelangt. Damit man den Kolben 16 nicht herausziehen kann, kann man im Verlauf der Wandung des Pumpenzylinders einen Anschlag, beispielsweise einen Ring 17, vorsehen. Man kann aber auch die Pumpeinrichtung entfernen, wenn man dies wünscht. Im gezeigten Beispiel ist eine Abdeckung 11 mit dem Kolben 16 verbunden, und eine Druckfeder 10 sorgt dafür, daß der Kolben 16 stets nach oben befördert wird. Dabei ist eine Druckfeder 10 nicht unbedingt erforderlich, wenn man den Kolben von Hand nach oben zieht.

Im Gefäß 6 ist - hier nicht dargestellt - wiederum ein Schlauch 1 eingeführt (hier also seitlich) und der zu Fig. 1 beschriebene Vorgang kann sich hier gleichwertig abspielen.

Natürlich kann die Pumpeinrichtung auch exzentrisch vorgesehen werden, so daß Raum für den Schlauch 1 im Mittelbereich verbleibt, wie dies in Fig. 1 gezeigt ist.

Fig. 3 zeigt eine Regulier- und Verschlußvorrichtung 31. Sie besteht aus einem Gehäuse 25, das den Schlauch 22 außen umfaßt. Am Schlauch 22 sind zwei Ringe 27 und 28 im Abstand vorgesehen; in den Zwischenraum greift eine Einziehung oder ein Ring 26 des Gehäuses 25 ein. Hält man das Sprührohr 19 fest und schiebt das Gehäuse 25 nach oben, dann bildet sich ein Knick 23 im Schlauch 22, so daß der Wasserstrahl nicht durchdringen kann; damit ist eine Verschlußstellung erreicht. Verschiebt man das Gehäuse 25 im gezeigten Beispiel langsam nach unten, dann streckt sich der Schlauch 22, die unmittelbare Abknickung 23 öffnet sich allmählich und der unter Druck stehende Wasserstrahl kann nach außen treten; und zwar je nach dem, wie groß die Abknickung ist, mehr oder weniger stark.

Das Gehäuse 25 könnte unmittelbar am Schlauch 22 im Bereich des Ringes 26 befestigt sein. Man kann am Schlauch - wie Fig. 3 zeigt - auch eine Hülse 20 befestigen, auf der gleitbar das Gehäuse 25 unmittelbar oder unter Zwischenfügen einer Manschette 21 vorgesehen ist. Ein Anschlag 30 - befestigt am Schlauch 22 oder an der Hülse 20 - sorgt dafür, daß die Hubbewegung begrenzt ist.

Statt der hier gewählten Konstruktion funktioniert diese Regulier- und Verschlußvorrichtung 31 auch ohne Hülse 20 und Manschette 21; dann gleitet das Gehäuse 25 unmittelbar auf dem Schlauch 22, wobei das obere Teil - hier Sprührohr 19 - auch aus härterem Material, z.b. einem Kunststoff, gefertigt werden kann und in eine Düse 18 mündet.

Statt der beiden Ringe 28, 27 würde auch der Ring 28 zum Mitnehmen genügen, denn der Schlauch 22 hat von sich aus das Bestreben, sich zu strecken, sofern die lichte Weite des Gehäuses 25 zu diesem Vorgang ausreichend groß gewählt ist, was erforderlich wäre.

GRÜNECKER, KINKELDEY, STOCKMAIR & PARTNER

PATENTANWÄLTE
EUROPEAN PATENT ATTORNEYS

A. GRÜNECKER, DIPL.-ING

DR H. KINKELDEY, DIPL.-ING

DR. W. STOCKMAIR, DIPL.-ING.AE.E (CALTECH)

DR K. SCHUMANN, DIPL.-PHYS

P. H. JAKOB, DIPL.-ING

DR. G. BEZOLD, DIPL.-CHEM

W. MEISTER, DIPL.-ING

H. HILGERS, DIPL.-ING

DR H. MEYER-PLATH, DIPL.-ING

8000 MÜNCHEN 22
MAXIMILIANSTRASSE 43

17. Jan. 1983

EP 954-30/Fr

HIRSCH, Paul

Karl-Theodor-Straße 91

D-8000 München 40

## Munddusche

### Patentansprüche

1. Munddusche ohne Antriebsmotor unter Verwendung eines Behälters, g e k e n n z e i c h n e t durch einen Druckbehälter (6a), in den druckdicht ein mit mindestens einer Öffnung im oberen Bereich versehener Schlauch (1,22) (Rohr) eingesetzt und an diesem eine Verschlußvorrichtung - gegebenenfalls eine Regulier- und Verschlußvorrichtung - außerhalb des Behälters (6a) vorgesehen ist.

2. Munddusche nach Anspruch 1, d a d u r c h   g e -
k e n n z e i c h n e t , daß der Druckbehälter aus
einem an einer Seite offenen Gefäß (6) und einem zugeordneten, druckdicht anbringbaren Deckel (2) gebildet ist.

3. Munddusche nach wenigstens einem der vorherigen Ansprüche, d a d u r c h   g e k e n n z e i c h n e t ,
daß das Volumen des Druckbehälters (6a) veränderbar ist,
z.B. durch schraubbares Verbinden Gefäß (6)/Deckel (2).

4. Munddusche nach wenigstens einem der vorherigen Ansprüche, d a d u r c h   g e k e n n z e i c h n e t ,
daß dem Druckbehälter (6a) ein Mittel (z.B. eine anbringbare Druckpatrone, Pumpe, Tablette, Anschluß für eine
Pumpe (z.B. Luftpumpe) usw.) zugeordnet ist, um einen
Überdruck zu erzeugen.

5. Munddusche nach Anspruch 4, g e k e n n z e i c h -
n e t   durch einen Anschluß mit Rückschlagventil zum
Anbringen (Befestigen) des Mittels.

6. Munddusche nach wenigstens einem der vorherigen Ansprüche, g e k e n n z e i c h n e t   durch eine
Pumpe (12,16) mit Rückschlagventil (14), angeordnet im
Gefäß (6) (Fig. 2).

7. Munddusche nach Anspruch 6, d a d u r c h   g e -
k e n n z e i c h n e t , daß ein federbelasteter
Deckel (11) am außenliegenden Ende des Kolbens (16) befestigt ist.

8. Munddusche nach wenigstens einem der vorherigen Ansprüche, d a d u r c h   g e k e n n z e i c h n e t ,
daß am Pumpenzylinder ein Anschlag (Ring) (17) für den
Kolben (16) befestigt ist.

9. Munddusche nach wenigstens einem der vorherigen Ansprüche, d a d u r c h g e k e n n z e i c h n e t , daß die Öffnung (9) eine lichte Weite hat, die geringer ist als die lichte Weite des Schlauches (1,22).

10. Munddusche nach Anspruch 9, d a d u r c h g e - k e n n z e i c h n e t , daß die lichte Weite der Öffnung (9) 50% oder weniger als die des Schlauches (1,22) ausmacht.

11. Munddusche nach wenigstens einem der vorherigen Ansprüche, d a d u r c h g e k e n n z e i c h n e t , daß der Öffnung (9) eine Verstelleinrichtung (z.B. Schieber, Manschette, einstellbares Ventil (Belüftungsventil) od.dgl.) zwecks Veränderung der Querschnittsfläche (Durchtrittsfläche) zugeordnet ist.

12. Munddusche nach wenigstens einem der vorherigen Ansprüche, d a d u r c h g e k e n n z e i c h n e t , daß der Schlauch (1,22) im Bereich der Öffnung (9) elastischer und/oder dünnwandiger ist.

13. Munddusche nach wenigstens einem der vorherigen Ansprüche, g e k e n n z e i c h n e t durch zwei sich gegenüberliegende Öffnungen (9).

14. Munddusche nach wenigstens einem der vorherigen Ansprüche, d a d u r c h g e k e n n z e i c h n e t , daß der Schlauch (1,22) im oberen Bereich (also dort, wo sonst die Öffnung (9) liegt) perforiert ist.

15. Munddusche, insbesondere nach Anspruch 1, d a - d u r c h g e k e n n z e i c h n e t , daß am außerhalb des Gefäßes (6) angeordneten Teil des Schlauches (22) - außenliegend - ein Gehäuse (25) vorgesehen ist, das an einem Ende am Schlauch (22) fixiert ist oder daß am Schlauch (22) wenigstens ein arretierter Mitnehmer für das Gehäuse (25) vorgesehen und daß das andere Ende des Gehäuses (25) gleitbar ist (Fig. 3).

16. Munddusche nach Anspruch 15, d a d u r c h  g e - k e n n z e i c h n e t , daß am außerhalb des Gefäßes (6) vorgesehenen Teil des Schlauches (22) im Abstand zwei Ringe (27,28) und in einem weiteren Abstand eine Hülse (20) befestigt sind und ein Gehäuse (25) mit einem an einem Ende angeordneten Ring (26) in den Zwischenraum die beiden Ringe (27,28) greift und das andere Ende des Gehäuses (25), den Schlauch (22) umgreifend, gleitbar ist.

17. Munddusche nach Anspruch 15 und 16, g e k e n n - z e i c h n e t  durch eine am Gehäuse (25) befestigte Manschette (21),die den Schlauch (22) oder eine am Schlauch (22) befestigte Hülse (20) umgreift.

18. Munddusche nach den Ansprüchen 15 bis 17, d a - d u r c h  g e k e n n z e i c h n e t , daß die Hülse (20) oder der Schlauch (1) einen Anschlag (30) (z.B. einen Ring) aufweist.

19. Munddusche nach den Ansprüchen 15 bis 18, d a - d u r c h  g e k e n n z e i c h n e t , daß der Ring (26) oder das entsprechende Ende des Gehäuses (25) am Schlauch (22) befestigt ist.

20. Munddusche nach wenigstens einem der vorherigen Ansprüche, g e k e n n z e i c h n e t  durch die Verwendung von Druckkapseln, gefüllt mit Butan oder Kohlensäure als Druckerzeugungsmittel.

21. Munddusche nach wenigstens einem der vorherigen Ansprüche, d a d u r c h  g e k e n n z e i c h n e t , daß am Deckel (2) und am Gefäß (6) einander zugeordnete Gewinde - druckdicht ausgeführt - vorgesehen sind.

22. Munddusche nach wenigstens einem der vorherigen Ansprüche, dadurch gekennzeichnet, daß am Ende des Schlauches (1,22) ein bekanntes Mundstück, z.B. eine Düse - vorzugsweise mit regulierbarem Durchtrittsquerschnitt - vorgesehen ist.

0086987

FIG.1

FIG.2

FIG.3

Europäisches
Patentamt

**EUROPÄISCHER RECHERCHENBERICHT**

**0086987**
Nummer der Anmeldung

EP 83 10 0776

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,A | DE-C- 831 868 (DRÄGERWERK) <br><br> * Seite 2, Zeilen 74-98 ; Figur 1 * <br><br> --- | 1,2,4, 20-22 | A 61 C 17/02 <br> A 61 H 13/00 |
| X,A | AT-B- 138 512 (SPARKLETS LTD. et al.) <br> * Seite 2, Zeilen 1-36 ; Figur * <br><br> --- | 1,2,4, 5 | |
| A | DE-U-1 814 775 (ZÜRNER) <br> * Seite 2, Zeilen 27-37 ; Figur 1 * <br><br> --- | 1,4,6 | |
| A | DE-A-2 455 293 (RAU) <br> * Seite 4, Zeile 24 - Seite 5, Zeile 32 ; Figur 1 * <br><br> --- | 1,4,7 | |
| A | DE-U-1 766 817 (STRANGE-HANSEN) <br><br> * Figuren 1, 2 * <br><br> --- | 15,17, 18 | **RECHERCHIERTE SACHGEBIETE (Int. Cl. ³)** <br><br> A 61 C 17/00 <br> A 61 H 13/00 <br> A 61 M 1/00 <br> A 61 M 5/00 <br> F 16 K 7/00 |
| A | CH-A- 103 277 (ABETEL) <br><br> --- | | |
| A | FR-A-1 069 913 (LABORATOIRES BRUNEAU & CIE) <br><br> --- | | |
| A | DE-C- 629 163 (THE LEYLAND AND BIRMINGHAM RUBBER CO. LTD.) <br><br> ---     -/- | | |

Der vorliegende Recherchenbericht wurde für alle Patentansprüche erstellt.

| Recherchenort <br> BERLIN | Abschlußdatum der Recherche <br> 29-04-1983 | Prüfer <br> SIMON J J P |
|---|---|---|

**Europäisches Patentamt**

# EUROPÄISCHER RECHERCHENBERICHT

| EINSCHLÄGIGE DOKUMENTE | | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-B-2 416 099 (BRAUN AG) <br><br> --- | | |
| D,A | DE-A-2 452 195 (RASMUSSEN) <br><br> --- | | |
| D,A | DE-C- 516 004 (EBEL et al.) <br><br> ----- | | |
| | | | **RECHERCHIERTE SACHGEBIETE (Int. Cl. ³)** |

Der vorliegende Recherchenbericht wurde für alle Patentansprüche erstellt.

| Recherchenort <br> BERLIN | Abschlußdatum der Recherche <br> 29-04-1983 | Prüfer <br> SIMON J J P |
|---|---|---|